# EUROPÄISCHE PATENTSCHRIFT

(11) **EP 1 462 067 B1**
(45) Veröffentlichungstag und Bekanntmachung des Hinweises auf die Patenterteilung: **25.02.2009**
(21) Anmeldenummer: 04007049.2
(22) Anmeldetag: 24.03.2004
(51) Int. Cl.: A61C 8/00

(54) **Temporär-Kieferimplantat**
Temporary jaw implant
Implant maxillaire temporaire

(30) Priorität: 24.03.2003 DE 20304756 U
(43) Veröffentlichungstag der Anmeldung: 29.09.2004
(73) Patentinhaber: Sybron Implant Solutions GmbH, 28199 Bremen (DE)
(72) Erfinder: Grafelmann, Hans L., Prof. Dr., 28359 Bremen (DE)
(74) Vertreter: Leitner, Waldemar

(56) Entgegenhaltungen:
- WO-A-01/43658
- WO-A-03/073955
- WO-A-03/086225
- CH-A- 670 563
- US-A- 4 406 623
- US-A- 4 863 383
- US-A- 5 022 860
- US-A- 5 601 429
- US-A- 5 697 779
- US-A1- 2002 177 104

## Beschreibung

Die Erfindung betrifft ein Temporär-Kieferimplantat mit einem Implantatkörper, mit erstem Gewinde zum Einschrauben in den Kiefer und mit einem Befestigungsmittel zum lösbaren Befestigen eines Pfostens.

Ein derartiges Temporär-Kieferimplantat ist aus der US 2002/177104 A1 bekannt. Üblicherweise sind solche Temporär-Kieferimplantate zum Einschrauben in den Kiefer und zum temporären Halten von provisorischem Zahnersatz mit einem Gewinde, das zum Einschrauben in den Kiefer dient, und mit einem Pfosten zum Halten des provisorischen Zahnersatzes versehen. Der Durchmesser eines solchen Implantatkörpers ist oftmals kaum größer als 1,5 - 3,0 mm. Er kann in den Kiefer eingeschraubt und später wieder entfernt werden, wobei bedingt durch seinen geringen Durchmesser nur eine geringe Kontaktfläche und Traumatisierung des Knochens entsteht, die schnell wieder verheilen kann.

Das Einschrauben des Temporär-Kieferimplantates erfolgt dabei über eine Kraftausübung auf den Pfosten, der fest mit dem Implantatkörper verbunden ist und somit die Kraft zum Einschrauben auf den Implantatkörper überträgt. Auf die gleiche Art und Weise kann das Temporär-Kieferimplantat ebenfalls über den Pfosten wieder herausgedreht werden.

Temporär-Kieferimplantate halten provisorischen Zahnersatz während der Einheilungsphase und der Zeitspanne, bis der Definitivzahnersatz hergestellt, angepasst und definitiv eingesetzt wird. Ein Temporär-Kieferimplantat ermöglicht somit, die Zeit der Einheilung und der Anfertigung des dauerhaften Zahnersatzes für den Patienten möglichst angenehm ästhetisch und funktionell zu überbrücken. Für das Schaffen des dauerhaften Zahnersatzes in den verschiedenen Anfertigungsphasen ist ein Temporär-Kieferimplantat jedoch meist störend. Sowohl für das Abdrucknehmen als auch für die verschiedenen Phasen des Einpassens sind die Pfosten von Temporär-Kieferimplantaten meist im Wege. Die genannten Arbeitsabläufe werden somit erschwert. Zum Teil ist es notwendig, Temporär-Kieferimplantate zwischenzeitlich vor der endgültigen Fertigstellung des endgültigen Zahnersatzes zu entfernen, Ein solches zwischenzeitliches Entfernen birgt vorzeitig die Gefahr einer oberflächlichen topografischen Gewebeveränderung im Anschlussbereich des endgültigen Zahnersatzes. Bisher bekannte Temporär-Kieferimplantate schaffen somit ein Provisorium zum Überbrücken der Zeit der Einheilung, der sogenannten Osseointegration, behindern jedoch die Abdrucknahme und die Einproben während der Herstellungsphase und die Herstellung des endgültigen Zahnersatzes.

Die US-A-5697799 beschreibt ein Temporär-Kieferimplantat, das einen Implantatkörper aufweist, in dem eine in Längsrichtung verlaufende und mit einem Gewinde versehene zylindrische Bohrung angeordnet ist, um unterschiedliche Applikationen auf dem Implantatkörper befestigen zu können, wobei das Gewinde apikal eine abgerundete Spitze aufweist.

Der Erfindung liegt daher die Aufgabe zugrunde, eine Möglichkeit zu schaffen, bei der gleichzeitig die Zeit bis zur Osseointegration sowie die Zeit, in der ein dauerhafter Zahnersatz geschaffen wird, für die Patienten möglichst angenehm zu überbrücken und dabei das Herstellen des dauerhaften Zahnersatzes so wenig wie möglich zu behindern.

Die zugrundeliegende Aufgabe wird erfindungsgemäß dadurch gelöst, dass das Befestigungsmittel als zweites Gewinde ausgebildet ist, und dass das zweite Gewinde zum ersten Gewinde einen gegenläufigen Gewindegang aufweist.

Indem das Befestigungsmittel des Temporär-Kieferimplantats als zweites Gewinde ausgebildet ist, wird in einfacher Art und Weise erreicht, dass im eingesetzten Zustand des Implantatkörpers in dem Kiefer das Temporär-Kieferimplantat mit einem Pfosten versehen sein kann, der das Halten eines provisorischen Zahnersatzes ermöglicht. Gleichzeitig ist es dabei möglich, den Pfosten vom Implantatkörper zu lösen und damit Arbeitsschritte wie das Abdrucknehmen oder sämtliche Phasen der Einproben (Gerüst-, Keramik- und Okklusionsprüfung) zu ermöglichen und zu vereinfachen. Beim erfindungsgemäßen Temporär-Kieferimplantat kann der Pfosten entfernt werden, ohne dass gleichzeitig der Implantatkörper des Temporär-Kieferimplantats aus dem Kiefer herausgeschraubt werden muss. Das vorübergehende Entfernen des Pfostens des Temporär-Kieferimplantats stellt daher für den Kiefer keinen operativen Eingriff dar. Dementsprechend können Komplikationen und Anlageungenauigkeiten für den definitiven Zahnersatz vermieden werden. Konturveränderungen, die nach Entfernung der Temporärimplantate eintreten, werden bei der endgültigen Fertigstellung berücksichtigt, oder der Gewindeteil kann ggf. ohne Pfosten im Kiefer belassen werden. Der Pfosten kann gerade sein, oder unterschiedliche Abschrägungen oder Abwinklungen aufweisen. Der Pfosten kann durch das zweite Gewinde auf den lmplantatkörper auf- und abgeschraubt werden. Hierdurch wird eine feste und spielfreie Verbindung zwischen Implantatkörper und Pfosten erreicht. Eine solche Verbindung ist kraftschlüssig, so dass Kraft vom Pfosten auf den Implantatkörper und umgekehrt übertragen werden kann.

Das erfindungsgemäße Temporär-Kieferimplantat zeichnet sich dadurch aus, dass das erste Gewinde zum zweiten Gewinde einen gegenläufigen Gewindegang aufweist. Mittels des ersten Gewindes wird der Implantatkörper z. B. in Uhrzeigerrichtung in den Kiefer eingeschraubt. Je tiefer der Implantatkörper mit dem ersten Gewinde in den Kiefer eingeschraubt ist, umso fester sitzt der lmplantatkörper in dem Kiefer. In diesem Zustand kann der Pfosten auf das dem ersten Gewinde gegenläufige zweite Gewinde z. B. gegen Uhrzeigerrichtung fest aufgeschraubt werden, ohne dass sich dabei der Implantatkörper wieder aus dem Kiefer herauslöst. Dabei wird der Pfosten auf das am Implantathals liegende zweite Gewinde aufgeschraubt, bis der Pfosten axial gegen den Implantatkörper an der Gewindebasis stößt und dadurch fest sitzt. Erst wenn in diesem Zustand der Pfosten weiter mit hoher Kraft in Richtung des Implantatkörpergewindes linksdrehend auf die apikale Spitze des Implantatkörpers geschraubt wird, bzw. zu schrauben versucht wird, wird erreicht, dass sich das erste Gewinde aufgrund der Gegenläufigkeit der beiden Gewinde aus dem Kiefer herausschrauben lässt. Somit wird erreicht, dass das zweite Gewinde zum einen zum Festschrauben des Pfostens auf dem Implantatkörper dient und zum anderen eine Möglichkeit zum Wiederherausschrauben des lmplantatkörpers aus dem Kiefer nach Abschluss der Behandlung geschaffen wird.

Bevorzugt weist das Temporär-Kieferimplantat am Implantatkörper eine gingivale Umlaufstufe im Bereich zwischen erstem und zweitem Gewinde auf. Durch diese gingivale Umlaufstufe wird zum einen erreicht, dass der Pfosten beim Aufschrauben auf den Implantatkörper axial gleichmäßig gegen diese Umlaufstufe stoßen kann, um somit einen festen gleichmäßigen Halt des Pfostens auf dem Implantatkörper zu erreichen. Weiterhin wird durch die gingivale Umlaufstufe im festgeschraubten Zustand des Pfostens ein gleichmäßig abgeschlossener Übergang zwischen Implantatkörper und Pfosten geschaffen. Hierdurch wird verhindert, dass sich die Gingiva mit der glatten Oberfläche des Temporärpfostens verbindet.

Es hat sich als günstig erwiesen, das Temporär-Kieferimplantat als Implantatkörper zusammen mit einem lösbar daran befestigbarem Pfosten zum Halten von Zahnersatz bereitzustellen. Es ist vorteilhaft, wenn der Pfosten ein Innenlinksgewinde zum Aufschrauben auf einen Implantatkörper aufweist. Üblicherweise ist das erste Gewinde eines Implantatkörpers als Rechtsgewinde ausgebildet. Es bereitet weniger Mühe, einen Implantatkörper in die gewohnte Richtung, also rechtsherum, in den Kiefer einzuschrauben, weil dieser Arbeitsschritt insbesondere zum Ende hin wegen der Gewindeselbstschneidung etwas mühselig, ansonsten aber bekannt ist. Zum Erreichen einer Gegenläufigkeit des ersten und zweiten Gewindes ist dann für das zweite Gewinde und entsprechend auch für das Innengewinde des Pfostens ein Linksgewinde vorzusehen. Wenngleich das Aufschrauben des Pfostens aufgrund des Linksgewindes ungewohnt erscheinen mag, so wird doch das hierdurch erreichbare linksherum gerichtete Herausschrauben des Implantatkörpers aus dem Kiefer als gewohnter Vorgang wahrgenommen werden.

Bevorzugt weist der Pfosten eines Temporär-Kieferimplantats eine Öffnung zum Ansetzen eines Drehwerkzeugs auf. Insbesondere das Wiederherausdrehen des Implantatkörpers aus dem Kiefer, was bei der vorliegenden Erfindung mittels des Pfostens erreicht wird, erfordert anfangs viel Kraft und macht in der Regel die Verwendung von Werkzeug, insbesondere eines Drehwerkzeugs, erforderlich.

Der Pfosten eines weiteren zweiphasigen Temporär-Kieferimplantats weist alternativ eine Abschrägung zum Aufsetzen eines Insertionsschlüssels auf. Hiermit kann der Pfosten über einen Insertionsschlüssel auf- oder abgeschraubt werden. Die Abschrägung kann außerdem zum Einschrauben oder Lösen des Temporär-Kieferimplantats genutzt werden.

In einer weiteren bevorzugten Ausführungsform des Temporär-Kieferimplantats ist die Achse des Pfostens gegenüber der Achse des Pfostengewindes abgewinkelt. Hierdurch können anatomisch bedingte Schrägstellungen des Implantatkörpers gemäß anatomischer Situation und Parallelstellung zu benachbarten Zähnen oder Implantaten schon bei der Insertion berücksichtigt werden.

Bevorzugt ist ein Temporär-Kieferimplantat durch eine an dem Implantatkörper ausgebildete Öffnung zum Ansetzen eines Drehwerkzeugs gekennzeichnet. Das Ansetzen eines Drehwerkzeugs an der okklusalen Fläche des Implantatkörpers ist insbesondere für das Einschrauben des Implantatkörpers in den Kiefer von Bedeutung. Das schwierige Einschrauben des Implantatkörpers kann somit durch Verwendung eines Drehwerkzeugs erleichtert werden. Zum Wiederherausdrehen eines Implantatkörpers aus dem Kiefer ist ein solcher Ansatz wenig geeignet, weil er in der Gingivatiefe leicht vom Zahnfleisch überwachsen wird.

In einer weiteren Ausgestaltung ist die Öffnung zum Ansetzen eines Drehwerkzeugs als Innensechskant oder Kreuzschlitz ausgebildet. Eine solche Öffnung ist einfach ausgestaltet, und bietet dem anzusetzenden Drehwerkzeug dennoch ausreichenden Halt. Dabei ist eine konische Form des Innensechskants besonders günstig, weil hierdurch ein ebenfalls konisch ausgebildetes Drehwerkzeug passgenau angesetzt werden kann.

In einer bevorzugten Ausführungsform ist das Temporär-Kieferimplantat dadurch gekennzeichnet, dass es vor dem ersten Gewinde apikal eine abgerundete Spitze aufweist. Eine solche Abrundung verhindert das Durchstoßen von Gewebe oder anatomischen Knochenbegrenzungszonen, falls der Implantatkörper vollständig durch den Kieferknochen hindurchragen könnte, was insbesondere beim Einsetzen eines Implantatkörpers in den Oberkiefer unterhalb der Nasen- oder Kieferhöhle auftreten könnte. In diesem Fall reicht zwar der Implantatkörper beim Durchstoßen des Oberkieferknochens in die Kieferhöhle hinein, perforiert aufgrund der Abrundung jedoch nicht notwendigerweise die Sinus-Membran, sondern hebt diese lediglich an.

Gemäß einer weiteren Ausbildung ist das Temporär-Kieferimplantat dadurch gekennzeichnet, dass die Wendeln des Implantatkörpers vertikal angelegte Kerben in den umlaufenden Wendeln aufweist. Solche scharfen Vertikal-Kerben erleichtern das selbständige Einschneiden des Implantats in den Knochen und erhöhen den festen Sitz des Implantatkörpers im Knochen. Weiterhin kann hierdurch die Möglichkeit geschaffen werden, das Implantat im Kiefer zu belassen und lediglich den Pfosten vom Implantatkörper zu entfernen, um Platz für den dauerhaften Zahnersatz zu schaffen. Es ist auch möglich, das Temporär-Kieferimplantat bei multipler Insertion im kortikalen Knochen und bicortical abgestützt als Definitiv-Kieferimplantat zu verwenden, was bei stark resorbiertem interforaminalen Unterkiefer-Kieferkammprofil sinnvoll sein kann. Die Vertikal-Schnittkerben sind bevorzugt zueinander versetzt angeordnet. Der Versatz kann u. a. im Uhrzeigersinn oder Gegenuhrzeigersinn sein. Hierdurch wird eine gleichmäßige Verteilung der Kerben über das gesamte Gewinde erreicht und somit ein günstiges Einschneiden in den Knochen ermöglicht. Wenn gewünscht, kann mit entsprechender Beschichtung oder Oberflächenvergrößerung durch Anrauen des Implantatkörpers auch in diesen reduzierten Durchmessern ein festes Verwachsen des Kieferknochens mit dem Implantatkörper sicher erreicht werden.

Weiterhin weist das Temporär-Kieferimplantat in einer Ausführungsform einen Außendurchmesser des ersten Implantatgewindes auf, der von zervikal nach apikal konstant bleibt. Bevorzugt ist der Kern des ersten Gewindes dabei konisch ausgebildet. Beim Einschrauben des ersten Gewindes in den Kieferknochen übt ein solcher konischer Kern mit extern sich zu zervikal bis null abflachendem Außengewinde auch zervikal am Insertionsort eine radiale Kraft auf den begrenzenden Knochen aus und erreicht dadurch eine hohe Initiale Festigkeit des eingeschraubten Implantats. Bevorzugt nimmt die Tiefe des ersten Gewindes von apikal nach zervikal bis auf Null ab. Hierdurch wird erreicht, dass beim eingeschraubten Implantatkörper kein Gewindeansatz mehr aus dem Knochen an der Insertionsstelle heraussteht. Somit ergibt sich ein glatter Übergang zwischen Knochen und Gingiva im Penetrationsbereich.

In einer bevorzugten Ausführungsform ist das erste Gewinde des Temporär-Kieferimplantats ein selbstschneidendes Expansivgewinde. Hierdurch wird eine einfache Möglichkeit geschaffen, den Implantatkörper in den Kiefer einzusetzen und dabei eine sehr hohe Festigkeit zu erreichen. Es kann erforderlich sein, an der gewünschten Stelle im Kiefer eine je nach Knochensubstanzdichte größere oder kleinere Durchmesser-Kernbohrung durchzuführen, in die dann der Implantatkörper leichter direkt selbstschneidend eingeschraubt werden kann. Mitunter kann aufgrund des geringen Durchmessers eines Temporär-Kieferimplantats im spongiösen Knochen auf eine Kernbohrung ganz verzichtet werden. In jedem Fall schneidet das selbstschneidende Gewinde direkt beim Einschrauben seinen Gewindegang in den Kieferknochen. Weiterhin setzt sich der Implantatkörper so beim Einschrauben in den Kiefer unter direktem Knochenkontakt mit seinem Expansivgewinde in dem Gewindegang fest.

Um den Implantatkörper später wieder aus dem Kieferknochen leichter herausschrauben zu können, sollte das Gewinde weder beschichtet noch aufgeraut sein. Andernfalls bestände die Gefahr, dass der Kieferknochen mit dem Implantatkörper verwächst, d. h. sogenannt osseointegriert, was ein Wiederherausdrehen des angerauten Implantatkörpers mit diesem Spezialgewinde erschwert, wenn nicht sogar unmöglich machen würde, oder eine Fraktur des dünnen osseointegrierten Implantatkörpers eintreten kann.

In einer weiteren Ausgestaltung ist das Temporär-Kieferimplantat durch eine lösbar an dem Implantatkörper befestigbare Einheilkappe zum primären Abdecken des okklusalen Endes gekennzeichnet. Zum Halten des provisorischen Zahnersatzes ist aber an dem Implantatkörper ein Pfosten erforderlich. Für Arbeiten, die zum Erstellen des dauerhaften Zahnersatzes erforderlich sind, wird der Pfosten vom Implantatkörper entfernt und das okklusale Ende des Implantatkörpers ist dann offen, wobei Befestigungsmittel wie das zweite Gewinde und auch Öffnungen zum Ansetzen eines Drehwerkzeuges, wie beispielsweise ein Innensechskant oder Kreuzschlitz, offengelegt sein können. Um zu verhindern, dass sich Zahnfleisch, Abdruckmaterialien oder ähnliches in Teile des offengelegten Endes setzen, kann anstelle des Pfostens temporär, z. B. während der Abdrucknahme eine flache Abdeckkappe aufgesetzt werden. Elemente des okklusalen Gewindeendes des Implantatkörpers können so nicht zugesetzt oder mit abgeformt werden, und die zum Erstellen des dauerhaften Zahnersatzes erforderlichen Arbeiten können ungehindert ausgeführt werden. Ein Temporär-Kieferimplantat mit befestigbarer Einheilkappe weist bevorzugt ein oder mehrere Merkmale des Temporär-Kieferimplantats mit losbar befestigbaren Pfosten auf.

Ein bevorzugtes Temporär-Kieferimplantat mit einem Implantatkörper mit erstem Gewinde zum Einschrauben in einen Kiefer und mit einem Pfosten ist dadurch gekennzeichnet, dass der Implantatkörper axiale Kerben im ersten Gewinde aufweist. Hierdurch wird die Selbstschneidefähigkeit des ersten Gewindes erhöht. Eine solche Eigenschaft ist besonders bei Temporär-Kieferimplantaten von großer Bedeutung, weil Temporär-Kieferimplantate wie eingangs beschrieben einen besonders geringen Durchmesser aufweisen. Durch die Verbesserung der Selbstschneidefähigkeit wird somit das Brechen bzw. Reißen des Implantatkörpers beim Einschrauben in den Kiefer vermieden. Als besonders günstig hat sich eine zueinander vor- oder rücklaufend versetzte Anordnung der Kerben erwiesen. Dies verhindert ein Aus- und Rückschrauben.

Zum Einschrauben des erfindungsgemäßen Temporär-Kieferimplantats als Einstückteil ist es günstig, dass dieses am Ansatz zwischen Implantatkörper und Pfosten mit äußerem Sechs-, Achteck oder Nutenprofil zum Ansetzen eines Drehwerkzeugs versehen ist. Zum Aufnehmen des Zahnersatzes ist der Pfosten okklusal bevorzugt mit einer Retentionskugel versehen, wobei der Durchmesser der Retentionskugel kleiner als der Durchmesser des Sechs- oder Achtecks ist. Hierdurch wird ermöglicht, dass ein Werkzeug zum Einschrauben des Pfostens in den Kiefer über die Retentionskugel geführt und dann an dem Sechs- oder Achteck oder Nutenprofil angesetzt werden kann.

Die Erfindung wird nachfolgend anhand der folgenden Zeichnungen näher erläutert. Es zeigen:
- Figur 1: ein erfindungsgemäßes Temporär-Kieferimplantat im Querschnitt mit gelöstem geraden Pfosten,
- Figur 2: ein erfindungsgemäßes Temporär-Kieferimplantat im Querschnitt mit aufgesetztem geraden Pfosten,
- Figur 3: einen erfindungsgemäßen Implantatkörper in einer perspektivischen Darstellung mit Werkzeugeingriff
- Figur 4a: ein einstückiges Temporär-Kieferimplantat, jedoch mit Rund- bzw. Kugelpfosten mit Achteck-Insertionsschlüsselprofil und selbstschneidendem Expansionsgewinde,
- Figur 4b: das Temporär-Kieferimplantat der Figur 4a in einer Draufsicht, und
- Figur 5: ein erfindungsgemäßes Temporär-Kieferimplantat im Querschnitt mit aufgesetztem, abgewinkelten Pfosten.

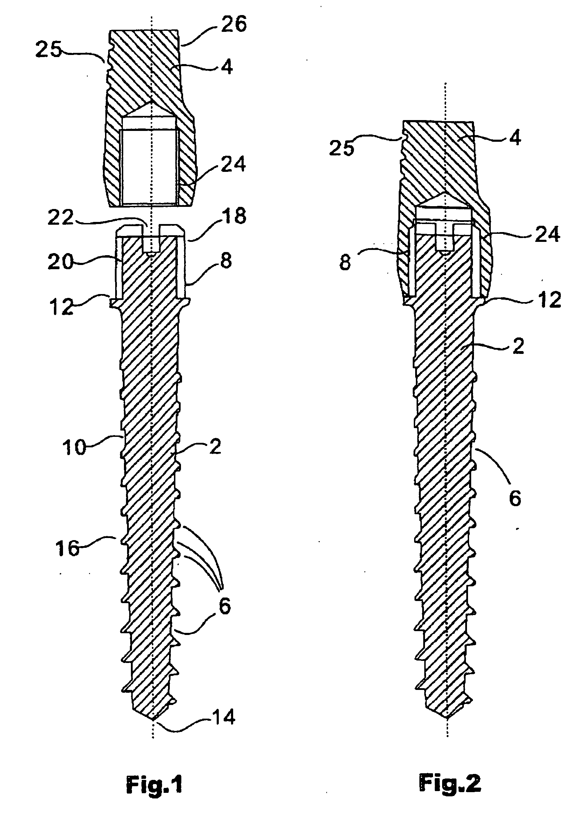

Das Temporär-Kieferimplantat gemäß Figur 1 weist einen Implantatkörper 2 und einen Pfosten 4 auf. Der Implantatkörper 2 weist ein erstes Gewinde 6 und ein zweites Gewinde 8 auf. Mithilfe des zweiten Gewindes 8 kann der Implantatkörper 2 in den Kiefer geschraubt und dort gehalten werden. Dabei weist das erste Gewinde 6 einen konischen Gewindekern 10 auf Der Gewindekern 10 verjüngt sich von der gingivalen Umlaufstufe 12 aus in Richtung der apikalen Spitze 14. Der Außendurchmesser des ersten Gewindes 6, also der Außendurchmesser seiner Wendeln 16, bleibt über die gesamte Länge des ersten Gewindes 6 konstant. In Richtung der gingivalen Umlaufstufe 12 nimmt die Tiefe des ersten Gewindes 6 bis auf Null ab. Im Bereich der gingivalen Umlaufstufe ist der Durchmesser des Gewindekerns 10 und der Wendeln 16 somit gleich.

Das zweite Gewinde 8 ist an dem okklusalen Ende 18 des Implantatkörpers 2 angeordnet. Das zweite Gewinde 8 ist als Linksgewinde mit zylindrischem Gewindekern 20 und konstanter Gewindetiefe ausgebildet. Das zweite Gewinde 8 grenzt bei Endstellung direkt an die okklusale Auflage der gingivalen Umlaufstufe an.

Weiterhin weist das okklusale Ende 18 des Implantatkörpers 2 eine Öffnung 22 zum Ansetzen eines Drehwerkzeuges auf. Die Öffnung 22 ist dabei als Kreuzschlitz mit einer Zentrierbohrung 23 ausgebildet. Die Öffnung kann auch als Hexagon oder Octagon ausgebildet sein. Somit kann der Implantatkörper 2 mithilfe eines Kreuzschlitzwerkzeuges oder eines Hexagon- oder Octagonschlüssels in den Kiefer eingeschraubt oder ohne Pfosten je nach Tiefe in der Gingiva auch ausgeschraubt werden.

Der Pfosten 4 weist ein Innengewinde 24 auf, das an das zweite Gewinde 8 des Implantatkörpers 2 angepasst ist. Der Pfosten 4 kann somit auf den Implantatkörper 2 aufgeschraubt werden. Das zweite Gewinde 8 kann als Linksgewinde und dabei das erste Gewinde 6 als Rechtsgewinde ausgestaltet sein. In diesem Fall kann der Implantatkörper mit aufgesetztem Pfosten in Endstellung nicht eingeschraubt, sondern nur herausgenommen werden, welches Sinn dieser Ausgestaltung ist.

Der Pfosten 4 weist Retentionsrillen 25 und eine Abschrägung 26 auf, die das Ansetzen eines Drehwerkzeugs ermöglicht. Der Pfosten 4 kann somit mithilfe eines Drehwerkzeuges gedreht werden, um somit auf den Implantatkörper 2 aufgeschraubt zu werden. Weiterhin kann über den Pfosten eine Drehkraft auf den Implantatkörper 2 ausgeübt werden, um den Implantatkörper 2 mit Linksgewinde aus dem Kiefer heraus oder mit Rechtsgewinde in den Kiefer hinein zu schrauben.

In Figur 2 ist der Pfosten 4 vollständig auf den Implantatkörper 2 aufgeschraubt. Hierbei sitzt der Pfosten 4 fest an der gingivalen Umlaufstufe 12, zu der er einen geschlossenen Abschluss herstellt. Dabei greift das Innengewinde 24 des Pfostens 4 um das zweite Gewinde 8 des Implantatkörpers 2.

Das erste Gewinde 6 ist zu dem zweiten Gewinde 8 gegenläufig. Durch die gleichmäßige zylindrische Ausgestaltung des zweiten Gewindes 8 und des Innengewindes 24 im Pfosten 4 kann der Pfosten 4 mit wenig Drehmoment auf den Implantatkörper 2 aufgeschraubt werden. Eine kraftschlüssige Verbindung zwischen Pfosten 4 und Implantatkörper 2 entsteht erst dann, wenn der Pfosten 4 gegen die gingivale Umlaufstufe 12 stößt. In diesem Zustand sitzt der Pfosten 4 fest auf dem Implantatkörper 2, um somit das Tragen eines provisorischen Zahnersatzes zu ermöglichen.

Wird der Pfosten 4 in dem Zustand, in dem er bereits fest auf dem Implantatkörper 2 sitzt, dennoch in gleicher Richtung weitergedreht, so erreicht die Gegenläufigkeit des ersten Gewindes 6 und des zweiten Gewindes 8, dass der Implantatkörper aus dem Kiefer wieder herausgedreht wird.

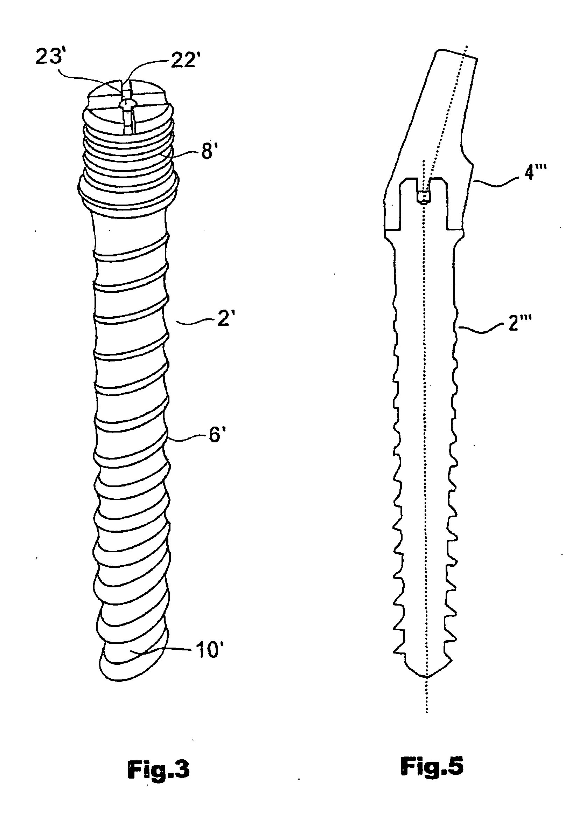

Der Implantatkörper eines erfindungsgemäßen Temporär-Kieferimplantats einer weiteren Ausführungsform ist in der Figur 3 perspektivisch dargestellt, um den Aufbau zu verdeutlichen. Der Implantatkörper 2' weist ein erstes Gewinde 6' mit konischem Gewindekern 10' auf. Ebenfalls ist zu erkennen, dass der Außendurchmesser des ersten Gewindes 6' über seine Länge konstant bleibt. Der Implantatkörper 2' weist ebenfalls ein zweites Gewinde 8' auf. Es ist zu erkennen, dass das Gewinde in axialer Richtung wie beispielsweise bei einem Metallgewinde gleichmäßig ausgebildet ist. Außerdem ist die Gewindesteigung des zweiten Gewindes 8' deutlich geringer als die Gewindesteigung des ersten Gewindes 6'. Ebenfalls ist in dieser perspektivischen Darstellung sehr die als Kreuzschlitz ausgebildete Öffnung 22' mit der Zentrierbohrung 23' zu erkennen.

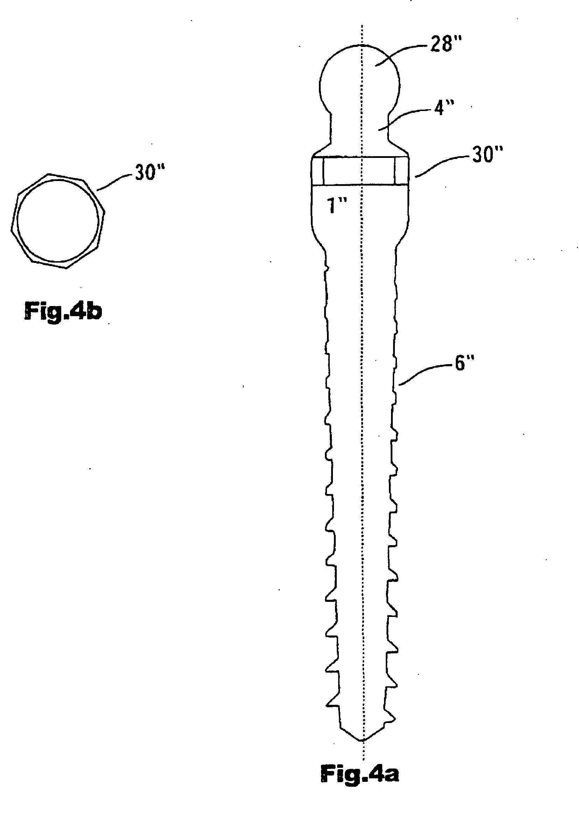

Figur 4a zeigt ein einstückiges Temporär-Kieferimplantat 1", bei dem das erste und einzige Gewinde 6" und der Pfosten 4" als ein Stück ausgebildet sind. Das Gewinde 6" ist gleich dem ersten Gewinde 6 gemäß Figur 1 und 2. Anstelle einer gingivalen Umlaufstufe weist das einstückige Temporär-Kieferimplantat nach Abschluss des Körpergewindes eine kontinuierliche Vergrößerung des Durchmessers mit sechs- oder achteckiger Außenform oder mit Nuten für entsprechenden Schlüsselansatz zur Insertion oder Explantation auf, die über den durchmesserreduzierten Hals nahtlos in den kugelförmigen Pfosten 4" übergeht. Der Pfosten 4" ist an seinem okklusalen Ende kugelförmig ausgebildet. Eine solche kugelförmige Ausgestaltung des Pfostens 4" ermöglicht eine Veränderung des Winkels zwischen Pfosten und aufzusetzenden Zahnersatz. Die konkrete Ausgestaltung des okklusalen Endes 28" des Pfostens 4" steht nicht nur im Zusammenhang mit der Einstückigkeit des Temporär-Kieferimplantats. Eine kugelförmige Ausgestaltung ist ebenfalls für einen Pfosten 4 eines erfindungsgemäßen, zweistückigen Temporär-Kieferimplantats möglich. Das einstückige Temporär-Kieferimplantat weist weiterhin ein äußeres Achtkantprofil 30" zum Ansetzen eines Insertionsschlüssels auf, das in Figur 4b deutlich zu erkennen ist. Auf die Kugel können verschiedene in der Auflage befestigte Retentionselemente aufgesetzt werden.

Figur 5 zeigt ein weiteres erfindungsgemäßes zweistückiges Temporär-Kieferimplantat, welches einen Implantatkörper 2"' und einen Pfosten 4"' aufweist. Der Pfosten 4"' dieses zweiteiligen Temporär-Kieferimplantats ist gegenüber der Achse des Implantatkörpers 2"' abgewinkelt ausgebildet. Somit es auch möglich, ein erfindungsgemäßes zweistückiges Temporär-Kieferimplantat an anatomisch bedingte schräge Insertionsrichtungen anzupassen.

Ein erfindungsgemäßes Temporär-Kieferimplantat erreicht bei Gegenläufigkeit des ersten Gewindes 6 und des zweiten Gewindes 8, dass über die Drehrichtung bestimmt werden kann, ob der Pfosten 4 wieder von dem Implantatkörper gelöst oder das gesamte Temporär-Kieferimplantat aus dem Kiefer herausgedreht wird. Trotz der üblichen kleinen Ausführung eines Temporär-Kieferimplantats, das in diesen Ausführungen kaum größer als 1,5 bis maximal 3,0 mm im Durchmesser ist, schafft die Erfindung eine zweiteilige Ausführungsform eines solchen Temporär-Kieferimplantats. Ein erfindungsgemäßes Temporär-Kieferimplantat kann somit zum Halten eines provisorischen Zahnersatzes verwendet werden, und vermeidet dennoch die Behinderung der Arbeiten, die zum Herstellen des dauerhaften Zahnersatzes erforderlich sind.

## Patentansprüche

1. Temporär-Kieferimplantat mit einem lmplantatkörper (2), mit erstem Gewinde (6) zum Einschrauben in den Kiefer und mit einem Befestigungsmittel zum lösbaren Befestigen eines Pfostens (4), **dadurch gekennzeichnet, dass** das Befestigungsmittel als zweites Gewinde (8) ausgebildet ist, und dass das zweite Gewinde (8) zum ersten Gewinde (6) einen gegenläufigen Gewindegang aufweist.

2. Temporär-Kieferimplantat nach einem der vorstehenden Ansprüche, **dadurch gekennzeichnet, dass** das Kieferimplantat eine gingivale Umlaufstufe (12) im Bereich zwischen dem ersten und dem zweiten Gewinde (6, 8) aufweist.

3. Temporär-Kieferimplantat nach einem der vorstehenden Ansprüche, **gekennzeichnet durch** einen lösbar an dem Implantatkörper (2) befestigbaren Pfosten (4) zum Halten von Zahnersatz.

4. Temporär-Kieferimplantat nach Anspruch 3, **dadurch gekennzeichnet, dass** der Pfosten (4) ein Innenlinksgewinde zum Aufschrauben auf den Implantatkörper (2) aufweist.

5. Temporär-Kieferimplantat nach Anspruch 3 oder 4, **dadurch gekennzeichnet, dass** der Pfosten (4) okklusal eine Öffnung zum Ansetzen eines Drehwerkzeugs aufweist.

6. Temporär-Kieferimplantat nach einem der Ansprüche 3-5, **dadurch gekennzeichnet, dass** der Pfosten (4) eine Abschrägung (26) zum Ansetzen eines Insertionsschlüssels aufweist.

7. Temporär-Kieferimplantat nach einem der Ansprüche 3-6, **dadurch gekennzeichnet, dass** die Achse des Pfostens (4) gegenüber der Achse des Pfostengewindes (24) abgewinkelt ist.

8. Temporär-Kieferimplantat nach einem der vorstehenden Ansprüche, **gekennzeichnet durch** eine an dem Implantatkörper (2) ausgebildete, insbesondere polygone Öffnung (22) zum Ansetzen eines Drehwerkzeugs.

9. Temporär-Kieferimplantat nach Anspruch 8, **dadurch gekennzeichnet, dass** die Öffnung (22) als Innensechs- oder -achtkant oder Kreuzschlitz ausgebildet ist.

10. Temporär-Kieferimplantat nach Anspruch 9, **dadurch gekennzeichnet, dass** der Innensechs- oder -achtkant konisch ausgebildet ist.

11. Temporär-Kieferimplantat nach einem der vorstehenden Ansprüche, **dadurch gekennzeichnet, dass** das erste Gewinde (6) apikal eine abgerundete Spitze aufweist.

12. Temporär-Kieferimplantat nach einem der vorstehenden Ansprüche, **dadurch gekennzeichnet, dass** der Implantatkörper (2) axiale Kerben im ersten Gewinde (6) aufweist.

13. Temporär-Kieferimplantat nach einem der vorstehenden Ansprüche, **dadurch gekennzeichnet, dass** die Kerben zu einander versetzt sind.

14. Temporär-Kieferimplantat nach einem der vorstehenden Ansprüche, **dadurch gekennzeichnet, dass** der Außendurchmesser des ersten Gewindes (6) von zervikal nach apikal konstant bleibt.

15. Temporär-Kieferimplantat nach einem der vorstehenden Ansprüche, **dadurch gekennzeichnet, dass** der Kern des ersten Gewindes (6) konisch ausgebildet ist.

16. Temporär-Kieferimplantat nach einem der vorstehenden Ansprüche, **dadurch gekennzeichnet, dass** die Tiefe des ersten Gewindes (6) von apikal nach zervikal bis auf null abnimmt.

17. Temporär-Kieferimplantat nach einem der vorstehenden Ansprüche, **dadurch gekennzeichnet, dass** das erste Gewinde (6) ein selbstschneidendes Expansivgewinde ist.

18. Temporär-Kieferimplantat nach einem der Ansprüche 1-4, **gekennzeichnet durch** eine lösbar an dem Implantatkörper befestigbare Einheilkappe zum Abdecken des zweiten Gewindes (8).

19. Temporär-Kieferimplantat nach Anspruch 18, **dadurch gekennzeichnet, dass** der Implantatkörper mit den Merkmalen der Ansprüche 8-16 ausgebildet ist.

## Claims

1. Temporary jaw implant, having an implant body (2) with a first thread (6) for inserting into a jaw, and fastening means for the detachably fastening of a post (4), **characterized in that** the fastening means is a second thread (8), and that the second thread (8) has a thread pitch oppositely orientated to the one of the first thread (6).

2. Temporary jaw implant according to claim 1, **characterized in that** the jaw implant has got a gingival circular step (12) in the area between the first and the second thread (6, 8).

3. Temporary jaw implant according to one of the previous claims, **characterized by** a post (4) being detachably fixed to the implant body (2) for fixing of a dental prosthesis.

4. Temporary jaw implant according to claim 3, **characterized in that** the post (4) has got an internal left-handed thread for screwing on the implant body (2).

5. Temporary jaw implant according to claim 3 or 4, **characterized in that** the post (4) has got occlusally an opening for applying a rotary tool.

6. Temporary jaw implant according to one of the claims 3-5, **characterized in that** the post (4) has got a bevel (26) for applying of an insertion tool.

7. Temporary jaw implant according to one of the claims 3-6, **characterized in that** the axis of the post (4) is angled in respect to the axis of the post thread (24).

8. Temporary jaw implant according to one of the previous claims, **characterized by** a, in particular polygonal, opening (22) provided in the implant body (2) for applying a rotary tool.

9. Temporary jaw implant according to claim 8, **characterized in that** the opening (22) is formed as an internal hexagon or octagon or as a cross slot.

10. Temporary jaw implant according to claim 9, **characterized in that** the hexagon or octagon is formed conically.

11. Temporary jaw implant according to one of the previous claims, **characterized in that** the first thread (6) has got apically a rounded tip.

12. Temporary jaw implant according to one of the previous claims, **characterized in that** the implant body (2) has got axial grooves in the first thread (6).

13. Temporary jaw implant according to one of the previous claims, **characterized in that** the grooves are displaced to each other.

14. Temporary jaw implant according to one of the previous claims, **characterized in that** the outer diameter of the first thread (6) remains constant from cervical to apical.

15. Temporary jaw implant according to one of the previous claims, **characterized in that** the core of the first thread (6) is formed conically.

16. Temporary jaw implant according to one of the previous claims, **characterized in that** the depth of the first thread (6) degreases from apical to cervical to zero.

17. Temporary jaw implant according to one of the previous claims, **characterized in that** the first thread (6) is a self-cutting reflationary thread.

18. Temporary jaw implant according to one of the claims 1-4, **characterized by** a healing cap for covering the second thread (8).

19. Temporary jaw implant according to claim 18, **characterized in that** the implant body is provided with the features of claims 8-16.

## Revendications

1. Implant maxillaire temporaire, comportant un corps d'implant (2), avec un premier filetage (6), destiné à être vissé dans le maxillaire, et avec un moyen de fixation pour la fixation amovible d'un pilier (4), **caractérisé en ce que** le moyen de fixation est réalisé sous la forme d'un deuxième filetage (8), et **en ce que** le deuxième filetage (8) comporte un pas de vis en sens opposé de celui du premier filetage (6).

2. Implant maxillaire temporaire selon l'une des revendications précédentes, **caractérisé en ce que** l'implant maxillaire comporte un épaulement périphérique (12) gingival dans la zone entre le premier et le deuxième filetage (6, 8).

3. Implant maxillaire temporaire selon l'une quelconque des revendications précédentes, **caractérisé par** un pilier (4), apte à être fixé de manière amovible contre le corps d'implant (2) et destiné à la fixation de la prothèse dentaire.

4. Implant maxillaire temporaire selon la revendication 3, **caractérisé en ce que** le pilier (4) comporte un pas de vis intérieur gauche pour le vissage sur le corps d'implant (2).

5. Implant maxillaire temporaire selon la revendication 3 ou 4, **caractérisé en ce que** le pilier (4) comporte du côté occlusal une ouverture pour l'application d'un outil rotatif.

6. Implant maxillaire temporaire selon l'une quelconque des revendications 3 à 5, **caractérisé en ce que** le pilier (4) comporte un chanfrein (26) pour l'application d'une clé d'insertion.

7. Implant maxillaire temporaire selon l'une quelconque des revendications 3 à 6, **caractérisé en ce que** l'axe du pilier (4) est coudé par rapport à l'axe du filetage (24) du pilier.

8. Implant maxillaire temporaire selon l'une quelconque des revendications précédentes, **caractérisé par** une ouverture (22), en particulier polygonale, ménagée sur le corps d'implant (2) et destinée à l'application d'un outil rotatif.

9. Implant maxillaire temporaire selon la revendication 8, **caractérisé en ce que** l'ouverture (22) est réalisée sous la forme d'un six pans creux ou d'un huit pans creux ou d'une fente en croix.

10. Implant maxillaire temporaire selon la revendication 9, **caractérisé en ce que** le six pans creux ou le huit pans creux sont réalisés avec une forme conique.

11. Implant maxillaire temporaire selon l'une quelconque des revendications précédentes, **caractérisé en ce que** le premier filetage (6) comporte du coté apical une extrémité arrondie.

12. Implant maxillaire temporaire selon l'une quelconque des revendications précédentes, **caractérisé en ce que** le corps d'implant (2) comporte des encoches axiales dans le premier filetage (6).

13. Implant maxillaire temporaire selon l'une quelconque des revendications précédentes, **caractérisé en ce que** les encoches sont décalées les unes par rapport aux autres.

14. Implant maxillaire temporaire selon l'une quelconque des revendications précédentes, **caractérisé en ce que** le diamètre extérieur du premier filetage (6) reste constant depuis le côté cervical vers le côté apical.

15. Implant maxillaire temporaire selon l'une quelconque des revendications précédentes, **caractérisé en ce que** le noyau du premier filetage (6) est conique.

16. Implant maxillaire temporaire selon l'une quelconque des revendications précédentes, **caractérisé en ce que** la profondeur du premier filetage (6) diminue jusqu'à zéro depuis le côté apical vers le côté cervical.

17. Implant maxillaire temporaire selon l'une quelconque des revendications précédentes, **caractérisé en ce que** le premier filetage (6) est un filetage expansif auto-taraudant.

18. Implant maxillaire temporaire selon l'une quelconque des revendications 1 à 4, **caractérisé par** un capuchon de cicatrisation, propre à être fixé de manière amovible sur le corps d'implant et destiné à masquer le deuxième filetage (8).

19. Implant maxillaire temporaire selon la revendication 18, **caractérisé en ce que** le corps d'implant est réalisé avec les caractéristiques des revendications 8 à 16.
